# EUROPEAN PATENT APPLICATION

(11) **EP 4 197 753 A1**
(43) Date of publication of application: **21.06.2023**
(21) Application number: 21275185.3
(22) Date of filing: 15.12.2021
(51) Int. Cl.: B29C 65/76, B29C 65/48, B29C 65/56, B29C 65/00, B29C 65/64

(54) **HYBRID JOINT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A hybrid bonded-fastened, HBF, joint 100 is described. The hybrid bonded-fastened, HBF, joint comprises: a first component 110 having a first joint surface 111, wherein the first component 110 is a composite component; a second component 120 having a second joint surface 121, wherein the second component 121 is a metallic component; a set of projections 130, including a first projection 130A, mutually interlocking the first component 110 and the second component 120 via the first joint surface 111 and the second joint surface 121; and an adhesive 140 mutually adhesively bonding the first component 110 and the second component 120 via the first joint surface 111 and the second joint surface 121; wherein the adhesive 140 comprises and/or is a disbondable adhesive.

## Description

### FIELD

The present invention relates to hybrid joints.

### BACKGROUND

Advanced airframe designs increasingly require hybrid combinations of dissimilar materials (also known as multi-materials), for example metals, composites and ceramics, where effective joining is critical to ensure high strength and damage tolerance. Hybrid joining has accordingly been considered for joining composites to metals, for example, by combining mechanical fastening with adhesive bonding (i.e. a hybrid bonded-fastened, HBF, joint). In a typical example, a HBF joint between a composite component, such as a fibre reinforced polymer component, and a metallic component, uses metallic pins protruding from the metallic component. The pins are inserted into a preform of the fibre reinforced polymer component during manufacture, so as to interlock with the fibre reinforcement. Resin is then combined with the fibre preform and co-cured with the metallic component in place to create a supplementary adhesive bond. More generally, hybrid joining may be defined as 'a method that makes use of multiple joining techniques such as mechanical interlocking and adhesive bonding'. Hybrid joints offer improvements in a range of mechanical properties including, but not limited to, ultimate strength, durability and damage tolerance, compared with individual methods of joining.

Nevertheless, there remains a need to improve hybrid joints.

### SUMMARY

According to a first aspect of the present invention, there is provided a hybrid bonded-fastened, HBF, joint comprising:
a first component having a first joint surface, wherein the first component is a composite component, a metallic component or a ceramic component;
a second component having a second joint surface, wherein the second component is a composite component, a metallic component or a ceramic component;
a set of projections, including a first projection, mutually interlocking the first component and the second component via the first joint surface and the second joint surface; and
an adhesive mutually adhesively bonding the first component and the second component via the first joint surface and the second joint surface;
wherein the adhesive comprises and/or is a disbondable adhesive.

According to a second aspect of the present invention, there is provided a method of joining a first component having a first joint surface, wherein the first component is a composite component, a metallic component or a ceramic component, and a second component having a second joint surface, wherein the second component is a composite component, a metallic component or a ceramic component, the method comprising:
mutually interlocking the first component and the second component via the first joint surface and the second joint surface using a set of projections, including a first projection; and
mutually adhesively bonding the first component and the second component via the first joint surface and the second joint surface using an adhesive;
wherein the adhesive comprises and/or is a disbondable adhesive;
thereby joining the first component and the second component using a hybrid bonded-fastened, HBF, joint.

According to a third aspect of the present invention, there is provided method of disjoining a hybrid bonded-fastened, HBF, joint;
wherein the HBF, joint comprises:
   a first component having a first joint surface, wherein the first component is a composite component, a metallic component or a ceramic component;
   a second component having a second joint surface, wherein the second component is a composite component, a metallic component or a ceramic component;
   a set of projections, including a first projection, mutually interlocking the first component and the second component via the first joint surface and the second joint surface; and
   an adhesive mutually adhesively bonding the first component and the second component via the first joint surface and the second joint surface;
   wherein the adhesive comprises and/or is a disbondable adhesive;
wherein the method comprises:
   mutually spacing apart the first component and the second component by disbonding the adhesive and thereby releasing the set of projections from the first joint surface and the second joint surface.

According to a fourth aspect of the present invention, there is provided use of a disbondable adhesive in a hybrid bonded-fastened, HBF, joint.

### DETAILED DESCRIPTION

According to a first aspect of the present invention, there is provided a hybrid bonded-fastened, HBF, joint comprising:
a first component having a first joint surface, wherein the first component is a composite component, a metallic component or a ceramic component;
a second component having a second joint surface, wherein the second component is a composite component, a metallic component or a ceramic component;
a set of projections, including a first projection, mutually interlocking the first component and the second component via the first joint surface and the second joint surface; and
an adhesive mutually adhesively bonding the first component and the second component via the first joint surface and the second joint surface;
wherein the adhesive comprises and/or is a disbondable adhesive.

In this way, the HBF joint may be disjoined comprising disbonding the disbondable adhesive, thereby providing mutual disassembly (also known as dismantling) of the first component and the second component and hence enabling inspection, maintenance, repair and/or end of life (EoL) processing. It should be understood that this mutual disassembly is non-destructive (i.e. without damage) with respect to the first component and the second component. In contrast, conventional HBF joints rely on co-curing/co-bonding of the first component and the second component, thereby precluding mutual disassembly, particularly mutual non-destructive disassembly, thereof. That is, conventional HBF joints do not enable inspection, maintenance, repair and/or end of life (EoL) processing.

Conventional HBF joints are known. The HBF joint according to the first aspect may thus be additionally or alternatively described as a conventional HBF joint characterised by adhesive bonding using a disbondable adhesive.

The HBF joint comprises the first component. The first component is a composite component (for example a fibre reinforced composite component, such as a carbon fibre composite (CFC) component or a glass fibre reinforced plastic (GRP) component, having a thermoplastic or a thermoset matrix), a metallic component (for example a sheet, a section, a forging, a casting, formed by subtractive manufacturing and/or formed by additive manufacturing) or a ceramic component. In one example, the first component is an aerospace component.

The HBF joint comprises the second component. The second component is a composite component (for example a fibre reinforced composite component, such as a carbon fibre composite (CFC) component or a glass fibre reinforced plastic (GRP) component, having a thermoplastic or a thermoset matrix), a metallic component (for example a sheet, a section, a forging, a casting, formed by subtractive manufacturing and/or formed by additive manufacturing) or a ceramic component. In one example, the second component is an aerospace component.

In one example, the first component is a composite component (for example a fibre reinforced composite component, such as a carbon fibre composite (CFC) component or a glass fibre reinforced plastic (GRP) component, having a thermoplastic or a thermoset matrix) and the second component is a metallic component (for example a sheet, a section, a forging, a casting, formed by subtractive manufacturing and/or formed by additive manufacturing).

In one example, the first component is a composite component (for example a fibre reinforced composite component, such as a carbon fibre composite (CFC) component or a glass fibre reinforced plastic (GRP) component, having a thermoplastic or a thermoset matrix) and the second component is a composite component (for example a fibre reinforced composite component such as a carbon fibre composite (CFC) component or a glass fibre reinforced plastic (GRP) component), optionally wherein the HBF joint comprises a metallic joint connector plate having opposed joint surfaces, wherein the joint connector plate is disposed between the first joint surface and the second joint surface.

The first component has (or defines) the first joint surface and the second component has (or defines) the second joint surface. It should be understood that the first joint surface and the second joint surface do not necessarily correspond or mate. For example, as described below, a third component or a joint connector plate, for example, may be disposed between the first joint surface and the second joint surface. In one example, the first joint surface and the second joint surface mutually correspond or mate. In one example, the first joint surface and the second joint surface do not mutually correspond or mate.

The HBF joint comprises the set of projections, including the first projection, mutually interlocking (i.e. mechanically interlocking) the first component and the second component via the first joint surface and the second joint surface. The role of the interlocking is to impede adhesive crack propagation and provide supplementary load paths. It should be understood that the set of projections extends through the first joint surface and the second joint surface. In one example, the first projection and/or the set of projections extends through the first component and/or the second component, for example partially through or fully through. It should be understood that the set of projections is removable from at least one of the first component and the second component (for example, by releasing such as by disbonding the adhesive, without damaging the first component and/or the second component), thereby enabling inspection, maintenance, repair and/or end of life (EoL) processing. In one example, the first projection comprises and/or is a releasable fastener. In one example, the first projections comprises and/or is a pin, for example a plain pin, a helical pin or a barbed pin. In one example, the set of projections is provided, at least in part, by the second component. For example, if the second component is a metallic component, the set of projections may be provided by pins (i.e. projections, also known as protrusions or male members) protruding from the second joint surface. For example, if the second component is a composite component, the set of projections may be provided by pins (more generally, protrusions) embedded in the second component and protruding from the second joint surface.

In one example, the first component comprises a first set of apertures (i.e. recesses, perforations, passageways, cavities or holes), including a first aperture, arranged (i.e. positioned and/or sized accordingly) to receive the set of projections therein and/or therethrough. In one example, the first aperture comprises and/or is a through aperture (i.e. extending fully through the first component). In one example, the first aperture comprises and/or is a blind aperture (i.e. extending partially through the first component from the first joint surface). In one example, the first aperture provides a clearance fit with respect to the first projection (c.f. an interference fit), wherein the adhesive infiltrates the first aperture and mutually bonds the first projection and walls of the first aperture. In one example, the first apertures comprises and/or is a cylindrical aperture or a frustoconical aperture (i.e. tapering away from the surface). In one example, the first set of apertures is formed by subtractive manufacturing, such as laser drilling, water jet machining and/or mechanical machining, by piercing, by preforming with a tool during moulding, by thermal perforation (for example for thermoplastics composites), 3D printing of female features (for example for thermoplastic composites and metallic composites).

In one example, the second component comprises a second set of apertures (i.e. perforations, passageways, cavities or holes), including a first aperture, arranged (i.e. positioned and/or sized accordingly) to receive the set of projections therein and/or therethrough. In one example, the first aperture comprises and/or is a through aperture (i.e. extending fully through the first component). In one example, the first aperture comprises and/or is a blind aperture (i.e. extending partially through the first component from the first joint surface). In one example, the second set of apertures is formed by subtractive manufacturing, such as laser drilling, water jet machining and/or mechanical machining, by piercing, by preforming with a tool during moulding, by thermal perforation (for example for thermoplastics composites), 3D printing of female features (for example for thermoplastic composites and metallic composites).

The HBF joint comprises the adhesive mutually adhesively bonding the first component and the second component via the first joint surface and the second joint surface. It should be understood that the first joint surface and the second joint surface may be adhesively bonded directly, such that they confront (i.e. closely spaced, for example according to recommended spacing for adhesion) having only the adhesive disposed therebetween or may be bonded indirectly, such as with a third component or a joint connector plate, for example, disposed between the first joint surface and the second joint surface. In one example, the first joint surface and the second joint surface mutually correspond and the adhesive mutually adhesively bonds the first joint surface and the second joint surface. That is, the first joint surface and the second joint surface are adhesively bonded directly.

The adhesive comprises and/or is a disbondable adhesive. Disbondable adhesives are known. See, for example, Hutchinson, AR., Liu, Y. and Lu, Y. (2016) 'Overview of disbonding technologies for adhesive bonded joints', Journal of Adhesion, DOI: https://doi.org/10.1080/00218464.2016.1237876.

In one example, the adhesive is a tailored adhesive formulation (also known as a reworkable adhesive system) disbondable adhesive. Generally, a tailored adhesive formulation is formulated to have a specific glass transition temperature such that upon heating to that temperature, bond strength is reduced and the first component and the second component may be mutually separated with reduced force. Examples of tailored adhesive formulations include reversible polymers such as thermally reversible isocyanate-based polymer formulations, based on dissociation of the isocyanate-labile hydrogen-based linkage to the isocyanate and labile-hydrogen starting groups, whereupon the formulation becomes a free-flowing melt that is soluble in acid; a low modulus epoxy adhesive formulation including thermally reversible furan-maleimide Diels-Alder adducts which form below 60°C and dissociate above 90°C; and electrochemically active cross-linkers incorporated into a polymer structure, whereupon electrochemical reduction is activated by applying an electric current, resulting in scission of the polymer backbone at cross-linked sites and hence polymer degradation. Other tailored adhesive formulation disbondable adhesives are known.

In one example, the adhesive comprises a functional additive, for example one or more chemical foaming agents (CFAs), physical foaming agents (PFAs), metallic particles and/or expandable inorganic particles. Generally, CFAs are functional additives that exhibit a volumetric expansion by undergoing a chemical reaction. Examples of CFAs include p-toluenesulfonyl hydrazide (pTSH), benzenesulfonyl hydrazide (BSH), azodicarboxamide (ADC) and 5-phenyl-1H-tetrazole (5P1HT). Generally, PFAs (also knowns as thermally expandable microspheres) are functional additives that exhibit a volumetric expansion by undergoing a change of state (typically from a solid or liquid to a gas). PFAs generally comprise a thermoplastic polymer shell encapsulating a hydrocarbon blowing agent having a low boiling temperature. These microspheres are typically 10 µm to 50 µm diameter and expand up to 40 to 60 times greater than their initial volumes. Both CFAs and PFAs expand the bondline, thereby urging apart the first component and the second component, and/or chemically change the adhesive, for example by reducing a strength thereof. Metallic particles may be included in the adhesive to absorb heat, for example when subjected to an alternating electromagnetic field, to thereby activate release of microencapsulated solvents to degrade the adhesive, for example. Examples of microencapsulated solvents include organic amines and acids, which may cleave epoxide backbones of adhesives. Examples of expandable inorganic particles include inorganic materials such as dilated graphite (also known as expandable graphite or intumescent flake graphite), vermiculite, pearlite or mica. Other functional additive disbondable adhesives are known.

In one example, the adhesive comprises an active substrate, for example an electrically-reversible amine-cured epoxy adhesive, in which disbonding is achieved when a potential difference of 10V to 50V and a current of 1-5mAcm⁻², is applied between electrically conductive components, resulting in ion conduction along the bond interface and polarisation of the adhesive boundary layer. Typically, at least one of the components is a metallic component. Other active substrate disbondable adhesives are known.

In one example, the adhesive comprises a metastable thermoplastic, such as a hot melt adhesive. Other metastable thermoplastics are known.

Typically, the disposable adhesive may be applied in the form of a paste, film and/or infused resin.

In one example, the HBF joint comprises a metallic joint connector plate (also known as a connector, a joint connector, an interface layer or an interlayer) having opposed joint surfaces, wherein the joint connector plate is disposed between the first joint surface and the second joint surface. In this way, the metallic joint connector plate provides an intermediate layer between the first component and the second component.

In one example, the set of projections is provided, at least in part, by the joint connector plate, for example as described with respect to the second component mutatis mutandis.

In one example, the set of projections, for example provided by the joint connector plate or by the second component, perforates the first component and optionally the second component, for example as described by EP 2 909 486 A1, incorporated herein in entirety by reference.

In one example, the set of projections, the second joint surface and/or the joint connector plate has or defines an array of pins extending therefrom, each pin having a pin head at an end distal from the joint surface, wherein the pins are formed initially with pointed pin heads, whereby pressing together the first component and the second component causes the array of pins to penetrate through the first component and force the pins through a retaining means providing an interference fit therewith, wherein the retaining means takes the form of a retaining mesh.

In one example, the joint connector plate comprises and/or is a ferromagnetic metal. In this way, the HBF joint may be heated via inductive heating of the joint connector plate for thermal disbonding of the adhesive.

In one example, the joint connector plate provides a set of electrical terminals for resistive heating thereof for thermal disbonding of the adhesive. Additionally and/or alternatively, the set of electrical terminals for resistive heating may be provided by the set of projections and/or solder or push fit electrical connection points.

In one example, the HBF joint comprises a metallic joint insert, wherein the joint insert is disposed between the first joint surface and the second joint surface and wherein the joint insert comprises and/or is a shape memory alloy or a bimetallic strip. In this way, the first component and the second component are urged apart upon heating of the metallic joint insert.

According to the second aspect of the present invention, there is provided a method of joining (i.e. assembly) a first component having a first joint surface, wherein the first component is a composite component, a metallic component or a ceramic component, and a second component having a second joint surface, wherein the second component is a composite component, a metallic component or a ceramic component, the method comprising:
mutually interlocking the first component and the second component via the first joint surface and the second joint surface using a set of projections, including a first projection; and
mutually adhesively bonding the first component and the second component via the first joint surface and the second joint surface using an adhesive;
wherein the adhesive comprises and/or is a disbondable adhesive;
thereby joining the first component and the second component using a hybrid bonded-fastened, HBF, joint.

The first component, the first joint surface, the second component, the second joint surface, the set of projections, the first projection, the adhesive, the disbondable adhesive and/or the HBF joint may be as described with respect to the first aspect.

The method may include any of the steps described with respect to the first aspect.

In one example, the method comprises disposing a metallic joint connector plate, having opposed joint surfaces, between the first joint surface and the second joint surface.

According to the third aspect of the present invention, there is provided method of disjoining (i.e. disassembly) a hybrid bonded-fastened, HBF, joint;
wherein the HBF, joint comprises:
   a first component having a first joint surface, wherein the first component is a composite component, a metallic component or a ceramic component;
   a second component having a second joint surface, wherein the second component is a composite component, a metallic component or a ceramic component;
   a set of projections, including a first projection, mutually interlocking the first component and the second component via the first joint surface and the second joint surface; and
   an adhesive mutually adhesively bonding the first component and the second component via the first joint surface and the second joint surface;
   wherein the adhesive comprises and/or is a disbondable adhesive;
wherein the method comprises:
   mutually spacing apart the first component and the second component by disbonding the adhesive and thereby releasing the set of projections from the first joint surface and the second joint surface.

The first component, the first joint surface, the second component, the second joint surface, the set of projections, the first projection, the adhesive, the disbondable adhesive and/or the HBF joint may be as described with respect to the first aspect.

The method may include any of the steps described with respect to the first aspect and/or the second aspect.

In one example, disbonding the adhesive comprises mutually spacing apart the first component and the second component. In one example, disbonding the adhesive comprises heating the HBF joint, for example as described with respect to the first aspect. In one example, disbonding the adhesive comprises thermal disbonding, for example as described with respect to the first aspect. In one example, disbonding the adhesive comprises electrical disbonding, for example as described with respect to the first aspect. In one example, disbonding the adhesive comprises chemical disbonding, for example as described with respect to the first aspect.

In one example, releasing the set of projections and disbonding the adhesive are performed simultaneously.

In one example, the method comprises replacing the first component with a replacement first component and joining the replacement first component and the second component according to the second aspect. In one example, the method comprises replacing the second component with a replacement second component and joining the first component and the replacement second component according to the second aspect.

In one example, the method comprises disposing, for example recycling, the first component and/or the second component, for example at end of life.

According to the fourth aspect of the present invention, there is provided use of a disbondable adhesive in a hybrid bonded-fastened, HBF, joint.

### BRIEF DESCRIPTION OF THE FIGURES

Embodiments of the invention will now be described by way of example only with reference to the figures, in which:
Figure 1 shows a cross-section of a hybrid bonded-fastened, HBF, joint, according to an exemplary embodiment;
Figure 2 shows a cross-section of the HBF joint of Figure 1, after disassembly;
Figure 3 shows a method according to an exemplary embodiment;
Figure 4 shows a method according to an exemplary embodiment; and
Figure 5 shows a cross-section of a hybrid bonded-fastened, HBF, joint, according to an exemplary embodiment, before joining..

### DETAILED DESCRIPTION

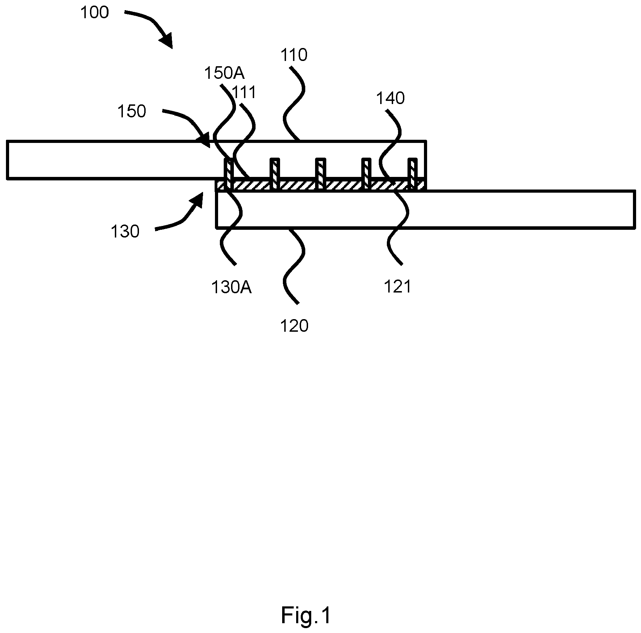

Figure 1 shows a cross-section of a hybrid bonded-fastened, HBF, joint 100, according to an exemplary embodiment. The hybrid bonded-fastened, HBF, joint comprises: a first component 110 having a first joint surface 111, wherein the first component 110 is a composite component; a second component 120 having a second joint surface 121, wherein the second component 121 is a metallic component; a set of projections 130, including a first projection 130A, mutually interlocking the first component 110 and the second component 120 via the first joint surface 111 and the second joint surface 121; and an adhesive 140 mutually adhesively bonding the first component 110 and the second component 120 via the first joint surface 111 and the second joint surface 121; wherein the adhesive 140 comprises and/or is a disbondable adhesive.

In this example, the set of projections 130 is provided by the second component 120. In this example, the first component 110 comprises a first set of apertures 150, including a first aperture 150A, arranged to receive the set of projections therein and/or therethrough. In this example, the first aperture 150A provides a clearance fit with respect to the first projection 130A, wherein the adhesive 140 infiltrates the first aperture 150A and mutually bonds the first projection 130A and walls of the first aperture 150A.

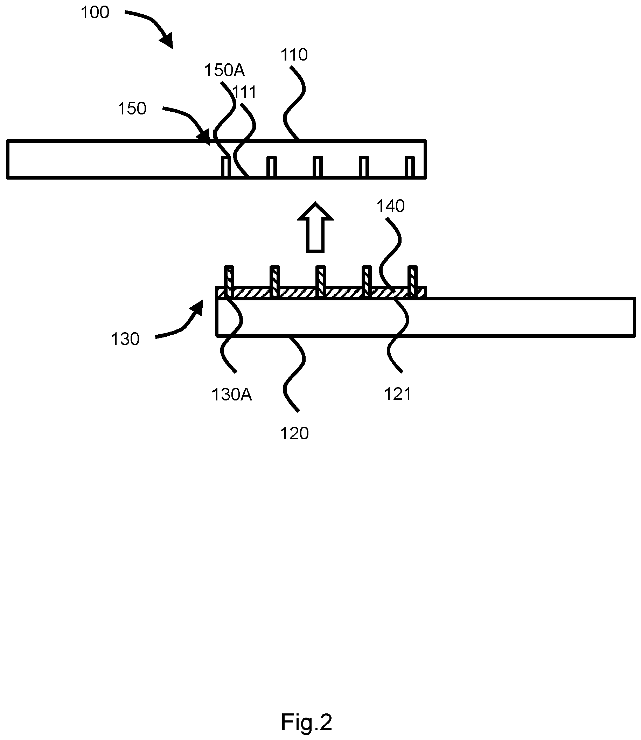

Figure 2 shows a cross-section of the HBF joint 1 of Figure 1, after disassembly.

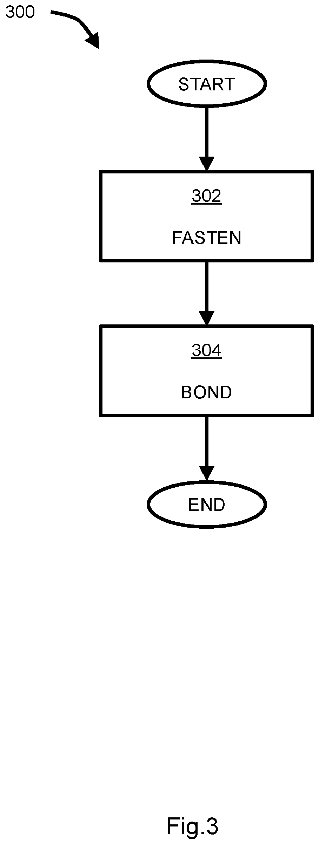

Figure 3 shows a method 300 according to an exemplary embodiment. The method is of joining a first component having a first joint surface, wherein the first component is a composite component, a metallic component or a ceramic component, and a second component having a second joint surface, wherein the second component is a composite component, a metallic component or a ceramic component. The method comprises: mutually interlocking the first component and the second component via the first joint surface and the second joint surface using a set of projections, including a first projection 302; and mutually adhesively bonding the first component and the second component via the first joint surface and the second joint surface using an adhesive 304; wherein the adhesive comprises and/or is a disbondable adhesive; thereby joining the first component and the second component using a hybrid bonded-fastened, HBF, joint. In this example, the first component comprises a first set of apertures, including a first aperture, arranged to receive the set of projections therein and/or therethrough. In this example, the first aperture provides a clearance fit with respect to the first projection, wherein the adhesive infiltrates the first aperture and mutually bonds the first projection and walls of the first aperture.

The method may include any of the steps described with respect to the first aspect, the second aspect and/or the third aspect.

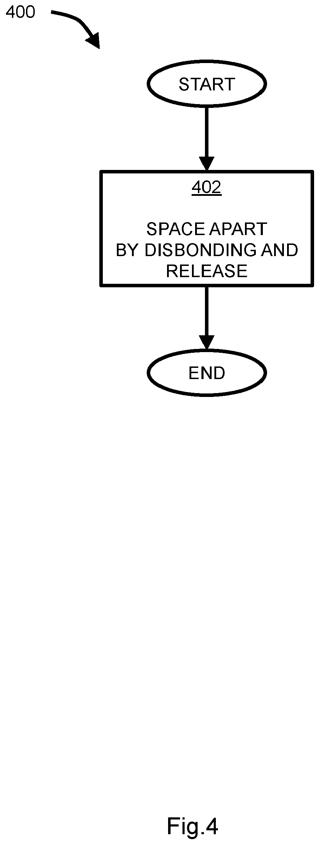

Figure 4 shows a method 400 according to an exemplary embodiment. The method is of disjoining a hybrid bonded-fastened, HBF, joint. The HBF joint comprises: a first component having a first joint surface, wherein the first component is a composite component, a metallic component or a ceramic component; a second component having a second joint surface, wherein the second component is a composite component, a metallic component or a ceramic component; a set of projections, including a first projection, mutually interlocking the first component and the second component via the first joint surface and the second joint surface; and an adhesive mutually adhesively bonding the first component and the second component via the first joint surface and the second joint surface; wherein the adhesive comprises and/or is a disbondable adhesive. The method comprises: mutually spacing apart the first component and the second component by disbonding the adhesive and thereby releasing the set of projections from the first joint surface and the second joint surface 402. In this example, the first component comprises a first set of apertures, including a first aperture, arranged to receive the set of projections therein and/or therethrough. In this example, the first aperture provides a clearance fit with respect to the first projection, wherein the adhesive infiltrates the first aperture and mutually bonds the first projection and walls of the first aperture. In this way, disbonding of the adhesive in the set of apertures further urges release of the set of projections therefrom. The method may include any of the steps described with respect to the first aspect, the second aspect and/or the third aspect.

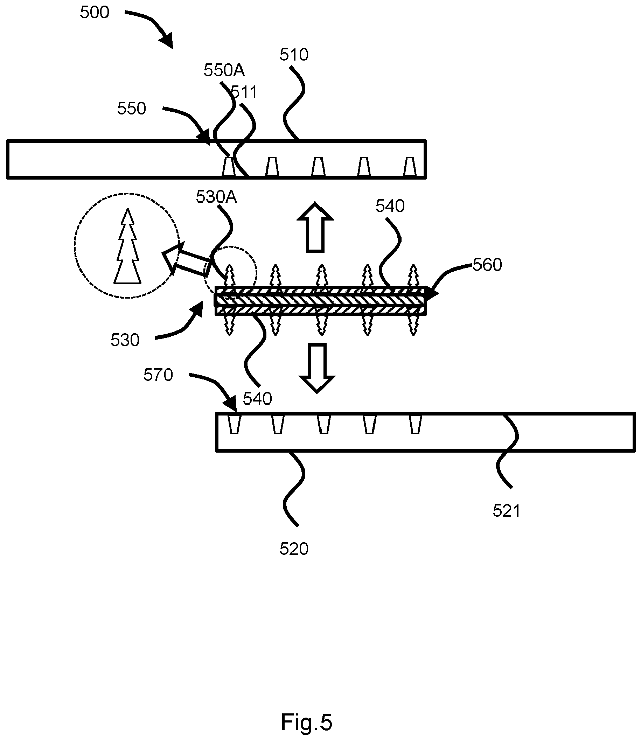

Figure 5 shows a cross-section of a hybrid bonded-fastened, HBF, joint 500, according to an exemplary embodiment, before joining. The hybrid bonded-fastened, HBF, joint comprises: a first component 510 having a first joint surface 511, wherein the first component 510 is a composite component; a second component 520 having a second joint surface 521, wherein the second component 521 is a composite component; a set of projections 530, including a first projection 530A, mutually interlocking the first component 510 and the second component 520 via the first joint surface 511 and the second joint surface 521; and an adhesive 540 mutually adhesively bonding the first component 510 and the second component 520 via the first joint surface 511 and the second joint surface 521; wherein the adhesive 540 comprises and/or is a disbondable adhesive.

In this example, the HBF joint comprises a metallic joint connector plate 560 having opposed joint surfaces, wherein the joint connector plate 560 is disposed between the first joint surface 511 and the second joint surface 521 and the set of projections 530 is provided by the joint connector plate 560. In this example, the first component 510 comprises a first set of apertures 550, including a first aperture 550A, arranged to receive the set of projections 530 therein and/or therethrough. In this example, the second component 520 comprises a second set of apertures 570, including a first aperture 570A, arranged to receive the set of projections 530 therein and/or therethrough. In this example, the first aperture 550A provides a clearance fit with respect to the first projection 530A, wherein the adhesive 540 infiltrates the first aperture 550A and mutually bonds the first projection 530A and walls of the first aperture 550A. In this example, the first projection 530A is a barbed pin. In this example, the first aperture 550A is a frustoconical aperture. In this example, respective apertures of the first set of apertures 550 and of the second set of apertures 570 are as described with respect to the first aperture 550A.

## Claims

1. A hybrid bonded-fastened, HBF, joint comprising:
a first component having a first joint surface, wherein the first component is a composite component, a metallic component or a ceramic component;
a second component having a second joint surface, wherein the second component is a composite component, a metallic component or a ceramic component;
a set of projections, including a first projection, mutually interlocking the first component and the second component via the first joint surface and the second joint surface; and
an adhesive mutually adhesively bonding the first component and the second component via the first joint surface and the second joint surface;
wherein the adhesive comprises and/or is a disbondable adhesive.

2. The HBF joint according to any previous claim, wherein the set of projections is provided, at least in part, by the second component.

3. The HBF joint according to any previous claim, wherein the first joint surface and the second joint surface mutually correspond and wherein the adhesive mutually adhesively bonds the first joint surface and the second joint surface.

4. The HBF joint according to any previous claim, comprising a metallic joint connector plate having opposed joint surfaces, wherein the joint connector plate is disposed between the first joint surface and the second joint surface.

5. The HBF joint according to claim 4, wherein the set of projections is provided, at least in part, by the joint connector plate.

6. The HBF joint according to claim 5, wherein the set of projections perforates the first component and optionally the second component.

7. The HBF joint according to any of claims 4 to 6, wherein the joint connector plate comprises and/or is a ferromagnetic metal.

8. The HBF joint according to any of claims 4 to 7, wherein the joint connector plate provides a set of electrical terminals for resistive heating thereof.

9. The HBF joint according to any previous claim, comprising a metallic joint insert, wherein the joint insert is disposed between the first joint surface and the second joint surface and wherein the joint insert comprises and/or is a shape memory alloy or a bimetallic strip.

10. The HBF joint according to any previous claim, wherein the adhesive comprises a functional additive.

11. The HBF joint according to any previous claim, wherein the second component is a composite component.

12. A method of joining a first component having a first joint surface, wherein the first component is a composite component, a metallic component or a ceramic component, and a second component having a second joint surface, wherein the second component is a composite component, a metallic component or a ceramic component, the method comprising:
mutually interlocking the first component and the second component via the first joint surface and the second joint surface using a set of projections, including a first projection; and
mutually adhesively bonding the first component and the second component via the first joint surface and the second joint surface using an adhesive;
wherein the adhesive comprises and/or is a disbondable adhesive;
thereby joining the first component and the second component using a hybrid bonded-fastened, HBF, joint.

13. The method according to claim 12, comprising disposing a metallic joint connector plate, having opposed joint surfaces, between the first joint surface and the second joint surface.

14. A method of disjoining a hybrid bonded-fastened, HBF, joint;
wherein the HBF, joint comprises:
a first component having a first joint surface, wherein the first component is a composite component, a metallic component or a ceramic component;
a second component having a second joint surface, wherein the second component is a composite component, a metallic component or a ceramic component;
a set of projections, including a first projection, mutually interlocking the first component and the second component via the first joint surface and the second joint surface; and
an adhesive mutually adhesively bonding the first component and the second component via the first joint surface and the second joint surface;
wherein the adhesive comprises and/or is a disbondable adhesive;
wherein the method comprises:
mutually spacing apart the first component and the second component by disbonding the adhesive and thereby releasing the set of projections from the first joint surface and the second joint surface.

15. The method according to claim 14, wherein disbonding the adhesive comprises mutually spacing apart the first component and the second component.
